Europäisches Patentamt

European Patent Office

Office européen des brevets

(11) Veröffentlichungsnummer: **0 280 163**
**A2**

## EUROPÄISCHE PATENTANMELDUNG

(21) Anmeldenummer: 88102254.5

(22) Anmeldetag: **17.02.88**

(51) Int. Cl.4 **G11B 27/30 , G11B 5/008**

(30) Priorität: 26.02.87 DE 3706159

(43) Veröffentlichungstag der Anmeldung:
**31.08.88 Patentblatt 88/35**

(84) Benannte Vertragsstaaten:
**AT BE CH DE ES FR GB GR IT LI LU NL SE**

(71) Anmelder: **Deutsche Thomson-Brandt GmbH**
**Postfach 1307**
**D-7730 Villingen-Schwenningen(DE)**

(72) Erfinder: **Scholz, Werner, Dipl.-Ing.**
**Osterstrasse 20**
**D-3007 Gehrden(DE)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) Verfahren zur Spurfindung bei einem Aufzeichnungsgerät.

(57) Bei der Aufzeichnung von Signalen in matrixartigen Blökken soll ein vorteilhaftes Verfahren zur Aufzeichnung von Informationen für eine einwandfreie Spurfindung geschaffen werden.

Ein Zeitfenster enthält Informationen über die Position innerhalb der betreffenden Spur (x) und in Bezug auf das Spurmuster (y) in einem Aufzeichnungscode, der dem Azimutschutz unterliegt.

Insbesondere geeignet für eine matrixartige Aufzeichnung entsprechend der DE-OS 35 09 584 (MaSc).

EP 0 280 163 A2

## Verfahren zur Spurfindung bei einem Aufzeichnungsgerät

Für die Aufzeichnung von Signalen wie insbesondere digitalen Video-oder Audiosignalen ist ein Verfahren mit sogenannter matrixartiger Aufzeichnung bekannt (DE-OS 35 09 584), bei dem auf dem Magnetband aufeinanderfolgende Blöcke mit jeweils zur Bandlänge kurzen und etwa parallel zur Bandkante verlaufenden Spuren geschrieben werden. Der Schreib-und Lesevorgang erfolgt mit einem rotierenden Kopfrad mit mehreren Köpfen, das durch eine Hubbewegung periodisch z.B. mit einer Frequenz von 0,5 Hz quer zur Bandrichtung hin und her bewegt wird. Bei einer derartigen Aufzeichnung ist es erforderlich, zusätzliche Maßnahmen vorzusehen, die insbesondere bei der Wiedergabe jeweils den Kopf genau entlang einer Spur führen. Derartige Maßnahmen sind allgemein als ATF (Automatic Track Finding) bekannt. Sie arbeiten im allgemeinen mit einem zusätzlich aufgezeichneten Spurfindungs-oder Spurführungssignal, aus dem bei der Abtastung eine Stellgröße für die Lage der Köpfe gewonnen werden kann.

Für eine derartige matrixartige Aufzeichnung ist in der DE-OS 35 17 830 ein Verfahren beschrieben, das im wesentlichen zur Spurführung, also zur Führung des Abtasters jeweils auf der abgetasteten Spur, jedoch nicht zum Auffinden einer bestimmten Spur geeignet ist. Ein derartiges Verfahren ist für die Abtastung einer Schrägspuraufzeichnung, bei der das längste periodisch wiederkehrende Aufzeichnungsmuster aus einer Spur oder einem Spurpaar (bei Berücksichtigung des entgegengesetzten Azimuts aufeinanderfolgender Spuren) besteht, im allgemeinen ausreichend.

Bei der beschriebenen matrixartigen Aufzeichnung (Masc) besteht das längste periodisch wiederkehrende Aufzeichnungsmuster aus einem Blockpaar, also zwei in Längsrichtung des Bandes aufeinanderfolgenden Blöcken, die mit entgegengesetzter Hubrichtung der Kopftrommel aufgezeichnet sind. Die zur Spurfindung dienenden Kennsignale müssen daher Informationen enthalten, die eine möglichst genaue, sichere und einfache Orientierung innerhalb der von dem Blockpaar eingenommenen Fläche auf dem Magnetband ermöglichen.

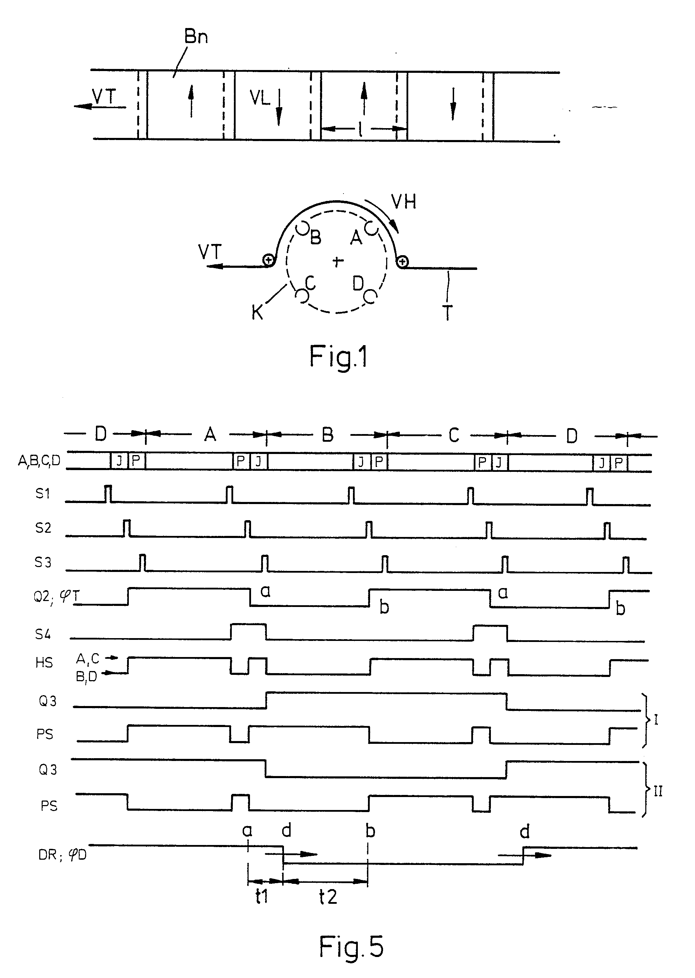

Fig. 1 zeigt für die beschriebene bekannte matrixartige Aufzeichnung die auf das Magnetband T geschriebenen Blöcke Bn und das Kopfrad K zum Erzeugen und Abtasten der Aufzeichnung. Das Kopfrad K mit den vier Köpfen A, B, C, D rotiert mit der Umfangsgeschwindigkeit VH. An dem Kopfrad K läuft das als Aufzeichnungsträger dienende Band T mit einer Umschlingung von ca. 180° und der Geschwindigkeit VT = VH/n, wobei n etwa die Zahl der geschriebenen Spuren innerhalb eines Blockes Bn ist. Gleichzeitig bewegt sich das Kopfrad K in einer Hubbewegung in axialer Richtung ständig mit konstanter Hubgeschwindigkeit VL hin und her. In den Umkehrbereichen weicht die Hubgeschwindigkeit kurzzeitig von ihrem konstanten Betrag ab. n = VH/VT ist die Anzahl der Kopfwechsel zwischen zwei Umkehrpunkten. Die Begrenzung der in Fig. 1 dargestellten Blöcke Bn erfolgt bei der Aufzeichnung oben und unten durch die Hubumkehr und rechts und links durch Ein-und Ausschalten des den einzelnen Köpfen A, B, C, D zugeführten Signals. Dieses Schalten des Signals erfolgt so, daß zwischen den Blöcken Bn senkrecht zur Bandkante verlaufende Begrenzungslinien der Blöcke entstehen. Die Spurlänge 1 ist etwa gleich dem am Umfang des Kopfrades K gemessenen Abstand zwischen zwei Köpfen. Aufeinanderfolgende Köpfe besitzen entgegengesetzten Azimutwinkel und gegenüberliegende Köpfe gleichen Azimutwinkel. Dadurch wird erreicht, daß innerhalb eines Blockes jeweils aufeinanderfolgende Spuren zur Erzielung einer hohen Übersprechdämpfung entgegengesetzten Azimutwinkel aufweisen.

Die vollständige Abtastung derartiger Aufzeichnungsblöcke ist nur dann durchführbar, wenn Hubrichtung, Hubstellung, Bandstellung und Kopfradphase für jeden Punkt des abgetasteten Spurmusters mit den entsprechenden Werten bei der Aufzeichnung übereinstimmen. Es ist daher erforderlich, bei einem Aufzeichnungsgerät für die beschriebene matrixartige Aufzeichnung diese Übereinstimmung herzustellen und aufrechtzuerhalten.

Der Erfindung liegt die Aufgabe zugrunde, ein möglichst zweckmäßiges und vorteilhaftes Verfahren zur Aufzeichnung der für die Herstellung und Aufrechterhaltung der genannten Übereinstimmung erforderlichen Informationen zu schaffen.

Diese Aufgabe wird durch die im Anspruch 1 beschriebene Erfindung gelöst. Vorteilhafte Weiterbildungen der Erfindung sind in den Unteransprüchen beschrieben.

Die zugrundeliegende matrixartige Aufzeichnung und die Erfindung werden im folgenden anhand der Zeichnung erläutert.

In Fig. 1 sind die Spurenden bei den einzelnen Blöcken Bn durch die senkrechten durchgezogenen Linien dargestellt. Im Bereich zwischen den gestrichelten Linien und den Spurenden sollen die Informationen für die Spurfindung aufgezeichnet werden.

Fig. 2 zeigt ein Beispiel für die Anordnung der einzelnen Informationssignale in den Spuren der Blöcke,

Fig. 3 ein Beispiel für die Art der verschiedenen Informationssignale,

· Fig. 4 eine Auswertungsschaltung für diese Signale und

Fig. 5 Signalverläufe innerhalb der Schaltung nach Fig. 4 und

Fig. 6 ein Beispiel für die Anordnung der Pilotsignale in drei Zeitfenstern.

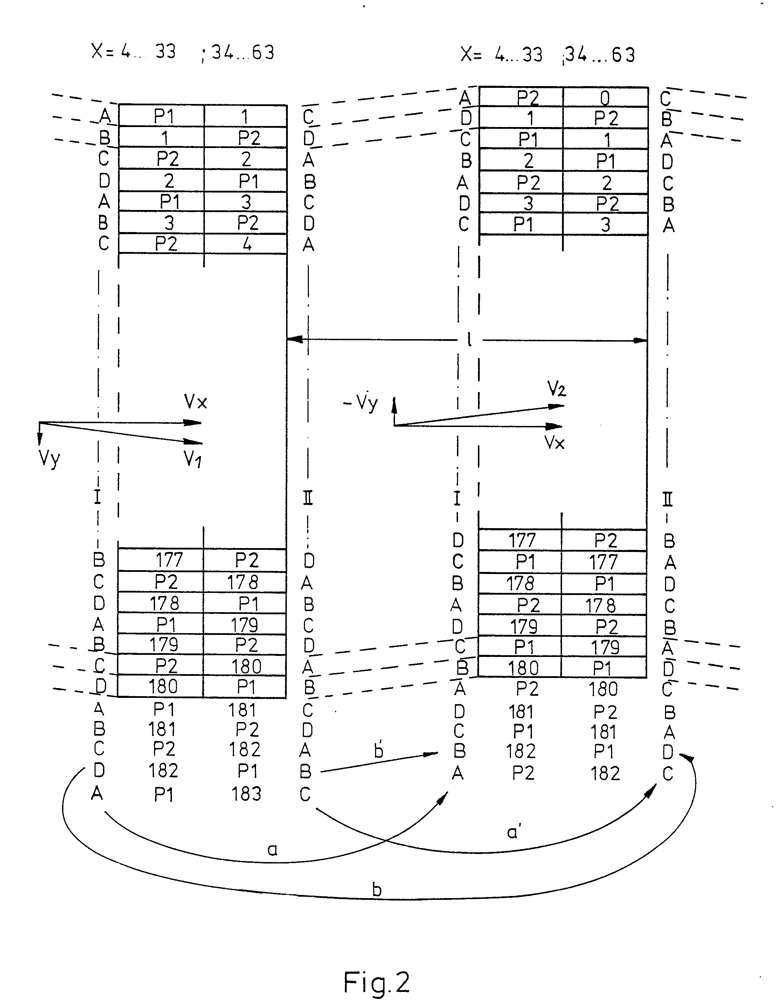

In Fig. 2 sind 360 Spuren innerhalb eines Blockes aufgezeichnet. Die Bereiche für die Spurfindungsinformationen, die hier an den Spurenden liegen und ca. 5 % der Spurlänge einnehmen, sind hier zeitlich gedehnt dargestellt. Diese Bereiche sind in zwei Zeitfenster unterteilt.

In den Spuren mit dem einen Azimutwinkel (Köpfe A und C) ist im ersten Zeitfenster eine Pilotfrequenz (P1, P2) und im zweiten Zeitfenster die Positionsinformation (x, y) aufgezeichnet. In den Spuren mit dem anderen Azimutwinkel (Köpfe B und D) ist der Inhalt der beiden Zeitfenster vertauscht.

Zur Gewinnung der eigentlichen Spurführungsinformation dienen hier zwei Pilotsignale P1, P2, deren Grundfrequenzen so niedrig sind, daß sie nicht dem Azimutschutz unterliegen, also keine nennenswerte Übersprechdämpfung zwischen benachbarten Spuren wirksam wird. Das Übersprechen dieser Frequenzen aus den Nachbarspuren ist ein Maß für die Spurlage, d.h. die jeweilige geometrische Lage des Kopfes relativ zur Spur. Die nicht mit den Pilotsignalen ausgefüllten Zeitfenster enthalten folgende Informationen:

a) Lage in Spurrichtung (x)

b) Lage in Hubrichtung (y)

c) Hubrichtung

d) Anordnung der Pilotsignale in den Nachbarspuren.

Zur Ortsbestimmung auf der Bandoberfläche werden hier die Koordinaten x und y eingeführt, wobei die positiven Richtungen dem Lesen einer Buchseite entsprechen. Die Spuren werden grundsätzlich von links nach rechts (pos. x-Richtung) gele sen. Die Blöcke werden abwechselnd von oben nach unten und umgekehrt gelesen.

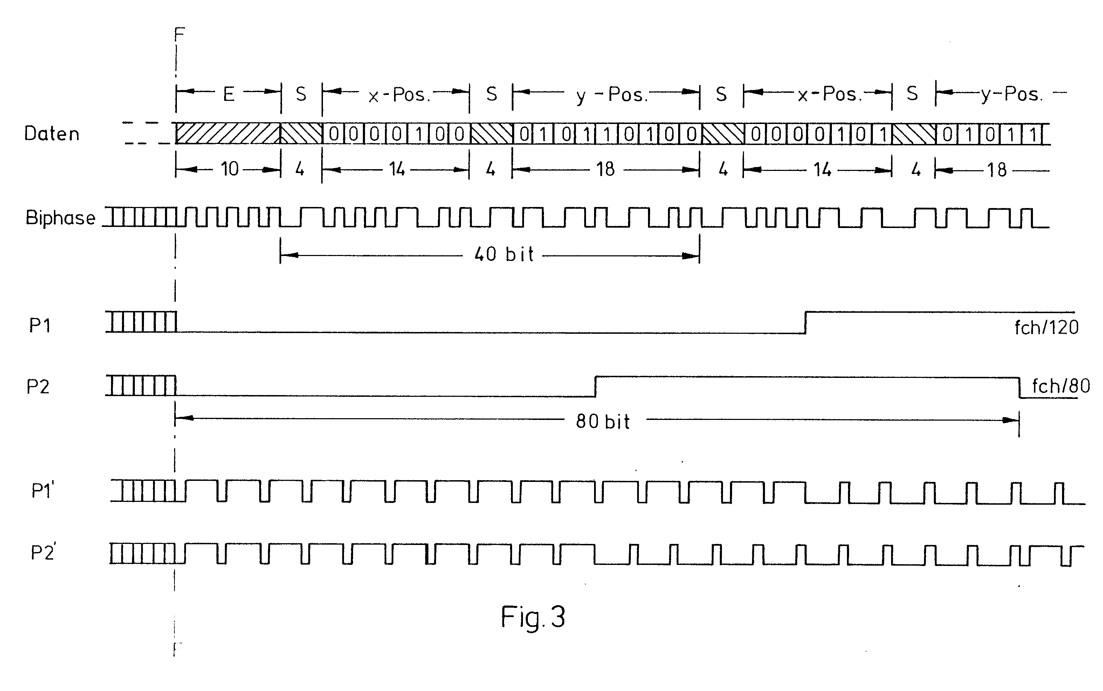

Fig. 3 zeigt Einzelheiten über die Beschaffenheit der verschiedenen Signale in den beiden Zeitfenstern. Die Linie F-F markiert den Beginn des ersten Zeitfensters. Bis zu dieser Linie sind Nutzsignale mit der Aufzeichnungsbitrate fch aufgezeichnet (z.B. fch = 20 Mbit/s).

Die vier unteren Zeilen von Fig. 3 zeigen Möglichkeiten für die Erzeugung der Pilotsignale P1 und P2. Im einfachsten Fall werden die gleichlangen Halbwellen jedes Pilotsignals durch Abzählen der Bittakte des übrigen PCM-Signals erzeugt. Das Signal P1 weist z.B. nach jeweils 60 Bittakten einen Pegelübergang auf, das Signal P2 nach jeweils 40 Bittakten. Diese Halbwellen können auch durch kurzzeitige Tastungen auf den Wert der jeweils entgegengesetzten Halbwelle unterbrochen werden, wie in den letzten beiden Zeilen von Fig. 3 dargestellt. Dieses bringt z.B. den Vorteil, daß bei der Aufzeichnung auf ein bereits bespieltes Band ohne Löschkopf die Löschwirkung des Signals verbessert ist. Die Unterbrechungen der langen Halbwellen wirken sich bei sehr tiefen Pilotfrequenzen auch günstig auf den Wiedergabepegel aus, außerdem bleibt die Taktregenerierung während der Pilotzeiten funktionsfähig, sofern die Tastungen mit dem PCM-Takt verkoppelt sind.

Unter der Annahme, daß in den Zeitfenstern gemäß Fig. 2 10 Perioden von P1 oder 15 Perioden von P2 aufgezeichnet werden, beträgt die Dauer der Zeitfenster
10 * 120 = 15 * 80 = 1.200 Bittakte. Diese Bitzahl ist verfügbar, um in dem jeweils nicht für ein Pilotsignal benutzten Zeitfenster die oben aufgezählten Informationen aufzuzeichnen. Bei der Wahl der Codierung dieser Informationen ist folgendes anzustreben:

1. DC-Freiheit zwecks Vermeidung von Übertragungsfehlern.

2. geringe tieffrequente Spektralanteile, um das Übersprechen der Pilotsignale aus den Nachbarspuren möglichst wenig zu stören.

3 geringe Wahrscheinlichkeit für eine Fehlauswertung beim Auftreten von Bitfehlern

4. gute Löschwirkung (nur wenn kein Löschkopf verwendet werden soll).

Ein Codierungsbeispiel, das diese Anforderungen weitgehend erfüllen kann, geht aus den beiden ersten Zeilen von Fig. 3 hervor. Hierbei wird die x-Position mit 7 Datenbits angegeben und die y-Position mit 9 Datenbits. Die abwechselnd aufeinanderfolgenden x-und y-Wörter sind jeweils durch ein Synchronsignal S voneinander getrennt. Für die Aufzeichnung wird jedes Datenbit durch 2 Bit des Übertragungscodes dargestellt, und zwar die "1" durch das Zeichen "10" und die "0" durch das Zeichen "01". Das Synchronsignal erhält das Zeichen "0011". Die auf diese Weise gebildeten x,y-Wortpaare haben einschließlich Synchronsignal eine Länge von 40 Übertragungsbits. Diese Länge paßt z.B. zu einer Wortlänge von 10 Bit für den Übertragungscode des übrigen PCM-Signals z.B. bei 8/10-Modulation.

Der in der zweiten Zeile von Fig. 3 dargestellte Übertragungscode ist DC-frei, da jedes Datenbit durch ein DC-freies Zeichen dargestellt ist, und die Synchronsignale ebenfalls DC-frei sind. Die Codierung der x-und y-Datenworte entspricht der Biphase-Level-Modulation. Es könnte auch eine andere Biphase-Variante gewählt werden. Das Biphase-Spektrum hat bekanntlich nur geringe tieffrequente Spektralanteile. Das Biphase-Signal ermöglicht auch eine sichere Fehlererkennung, indem überprüft wird, ob für die Dauer des Datenwortes Bitpaare mit jeweils entgegengesetztem Wert vorhanden sind. Die Datenworte sind durch die Synchronsignale begrenzt, die dieser Regel widersprechen. Je nachdem, ob zwischen zwei Synchronsignalen 7 oder 9 Bitpaare mit entgegengesetztem Wert ermittelt werden, stellt das Datenwort eine x-oder y-Information dar. Da während eines Zeitfensters 30 x,y-Wortpaare zu je 40 bit übertragen werden können, ist die Wahrscheinlichkeit groß, daß stets genügend viele fehlerfreie x-und y-Datenworte auswertbar sind. Die Sicherheit kann durch Vergleich aufeinanderfolgender Auswertungen noch in hohem Maße gesteigert werden.

In Fig. 3 beginnt das x,y-Informationssignal mit einer 0,1-Folge von 10 bit Länge (E). Das bedeutet, daß am Ende des 1.200 bit langen Zeitfensters nicht mehr 18 bit für das letzte y-Datenwort verfügbar sind. Die restlichen 8 bit können daher ebenfalls eine 0,1-Folge bilden.

Bei Betrachtung von Fig. 2 erkennt man, daß in y-Richtung Spurpaare gezählt werden. Die Spuren sind trotzdem eindeutig identifizierbar, da sie durch die Anordnung der Informationen in den beiden Zeitfenstern oder durch den Azimut unterscheidbar sind. Zwei aufeinanderfolgende Spuren besitzen also stets die gleiche y-Positionsangabe. Diese ist in Fig. 2 durch die Zahl in den nicht für die Pilotsignale P1 und P2 vorgesehenen Zeitfenstern dargestellt. Für die y-Positionsangabe sind bei 180 Spurpaaren je Block 8 bit ausreichend. Das 9. Bit (MSB des y-Wortes) wird zur Kennzeichnung der Hubrichtung verwendet. Es ist in positiver y-Richtung "0" und in negativer y-Richtung "1".

Als x-Positionsangabe dient ein Zahlenwert, der durch Zählen der 40-bit-Abschnitte, in denen die Positionsangaben wiederkehren, entstanden ist. Da jedes Zeitfenster 30 * 40 bit lang ist, wird z.B., wie in Fig. 2 angegeben, im ersten Zeitfenster von 4 bis 33 und im zweiten Zeitfenster von 34 bis 63 gezählt. Dafür sind 6 bit ausreichend. Da für das x-Positionswort 7 bit vorgesehen sind, ist das MSB als Reservebit zu betrachten.

Durch das in Fig. 2 dargestellte Informationsmuster ist die Positionierung der Abtastköpfe innerhalb eines Blockpaares festgelegt. Die beiden Möglichkeiten für die Spur-Kopf-Zuordnung werden durch die Folgen I und II dargestellt. Bei gleicher Hubumkehrdauer an der oberen und unteren Blockgrenze tritt nach jeweils einem Blockpaar ein Wechsel zwischen den beiden Folgen auf. Der Wechsel tritt in dem durch die Linien b, b' markierten Fall an der unteren Blockgrenze auf. Bei einer Hubumkehrdauer entsprechend a, a' tritt der Wechsel an der oberen Blockgrenze auf. Die Hubumkehr muß außerordentlich präzise erfolgen. Nach der Umkehrzeit, die einem ganzzahligen Vielfachen einer halben Kopfradumdrehung entspricht, muß sich der Kopf genau auf dem Ende der letzten Spur des zuvor aufgezeichneten bzw. abgetasteten Blockes befinden. Die Hubgeschwindigkeit muß zu diesem Zeitpunkt wieder auf den richtigen Wert eingestellt sein. Bei Erreichen des Endes der ersten Spur des neuen Blockes muß der nachfolgende Kopf das Ende der vorletzten Spur des vorhergehenden Blockes mit korrekter Spurlage überstreichen. Da auf gleicher Hubhöhe liegende Spurenden aufeinanderfolgender Blöcke entgegengesetzten Azimut besitzen, können dem Azimutschutz unterliegende Signale mit aufeinanderfolgenden Köpfen gleichzeitig abgetastet werden. Fig. 2 zeigt, daß bei auf gleicher Hubhöhe liegenden Spurenden aufeinanderfolgender Blöcke die Inhalte der Zeitfenster stets vertauscht sind, d.h. wenn bei der einen Spur im ersten Zeitfenster das Pilotsignal liegt, so befindet es sich bei der anderen Spur im zweiten Zeitfenster. Diese Anordnung bringt bei der Abtastung einer Masc-Aufzeichnung folgende Vorteile:

1. Obwohl Spurführungsinformationen nur am Ende der Spur aufgezeichnet sind, ist sowohl für den Spuranfang als auch für das Spurende eine Spurführungsinformation auswertbar.

2. Da die Spurführungsinformationen (Übersprechen von P1 und P2 aus den Nachbarspuren) nicht gleichzeitig auftreten, ist nur eine Auswerteschaltung erforderlich, der die Informationen nacheinander zugeführt werden.

3. Die Pilotfrequenzen P1 und P2 können den Spuren so zugeordnet werden, daß sich frequenzbedingte Unterschiede in den Übersprechamplituden aufheben und auf die Genauigkeit der Spurführung keinen Einfluß haben.

4. Die Zeiten, in denen das Pilotsignal der eigenen Spur abgetastet wird, sind für die Signalverarbeitung völlig nutzlos. Sofern die Pilotsignale nicht getastet sind (Fig. 3), kann in dieser Zeit nicht einmal die Taktregenerierung fortgesetzt werden. Durch die Auswertung von Informationen aus dem vorhergehenden Block können diese Zeiten sinnvoll genutzt werden.

Anhand von Fig. 2 ist erkennbar, daß das für die Spurführung auszuwertende Übersprechen der Pilotsignale P1 und P2 jeweils gleichzeitig mit dem aus der eigenen Spur abgetasteten Informationssignal für die x,y-Position auftritt.

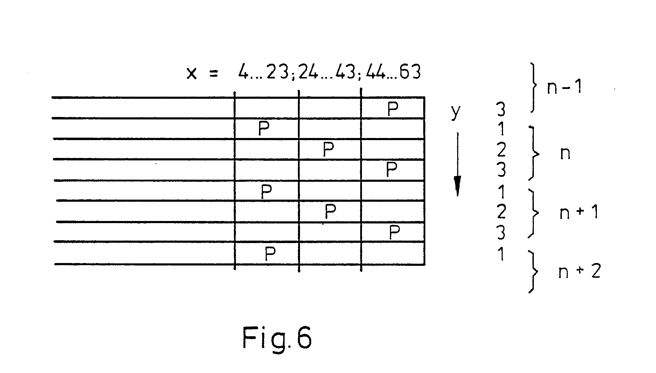

Die Information für die Hubrichtung wird, wie bereits erwähnt, durch das MSB des y-Datenwortes übertragen. Es fehlt also noch die Information für die Übersprechrichtung der Pilotsignale. Diese kann, z.B. bei zwei Zeitfenstern aus dem LSB der y-Positionsangabe entnommen werden. Bei drei Zeitfenstern (Fig. 6) werden zwei Bit für die Angabe der Übersprechrichtung benötigt, da es für die Anordnung der Pilotsignale in den beiden

4

Nachbarspuren drei Möglichkeiten gibt.

Anhand des Blockschalbildes Fig. 4 werden nun noch die für die Abtastung einer Masc-Aufzeichnung gemäß Fig. 2 erforderlichen Maßnahmen erläutert. Die in Fig. 4 auftretenden Signalverläufe sind in Fig. 5 dargestellt. Der Ausgang des Schalters SW1 wird mit Hilfe der Schaltspannung HS auf die Köpfe mit dem einen oder anderen Azimut geschaltet. Die Signale der Köpfe A und C bzw. B und D können bei einer Bandumschlingung von ≤ 180° einfach an den Eingängen des Schalters addiert werden. Ist der Umschlingungswinkel > 180°, so sind zwei weitere Schalter erforderlich, die jeweils zwischen den Köpfen mit gleichem Azimut umschalten.

Vom Ausgang des Schalters S1 gelangt das Signal

a) zur Schaltung für die Auswertung des Übersprechens der Pilotsignale P1 und P2,

b) zum Positionsdecoder, der die x,y-Informationen auswertet,

c) zum Signalprozessor für das eigentliche PCM-Signal, der auch die PLL-Schaltung für die Regenerierung des Bittaktes enthält.

Wie aus Fig. 5 ersichtlich, erfolgt eine Kopfumschaltung (Schaltspannung HS) grundsätzlich zwischen dem ersten und zweiten Zeitfenster (Spannung Q2). Ob während des ersten oder zweiten Zeitfensters auf das vom vorhergehenden Block abgetastete Signal geschaltet wird, bestimmt die Spannung S4.

Fig. 5 zeigt in der ersten Zeile die von den aufeinanderfolgenden Köpfen abgetasteten Signale. Während der beiden Zeitfenster am Ende der Spuren wird entweder das Pilotsignal P oder das dem Azimutschutz unterliegende Informationssignal J abgetastet. Das Informationssignal wird im Positionsdecoder unter Benutzung des Bittaktes C ausgewertet. Sofern sichergestellt ist, daß eine x-oder y-Positionsangabe fehlerfrei ausgewertet wurde, kann der entsprechende Positionszähler auf die korrekte Zählphase eingestellt werden. Diese Zähler werden mit den Taktspannungen C' bzw. Q2 ständig beaufschlagt, so daß die korrekte Zählphase auch dann aufrechterhalten bleibt, wenn die Positionsinformation nicht auswertbar ist. Dies kann z.B. der Fall sein, wenn sich die Köpfe infolge einer Spurabweichung auf den Nachbarspuren (entgegengesetzter Azimut) befinden. Die Zählschaltungen stellen sicher, daß die Köpfe dann wieder in die Lage zurückgeregelt werden, aus der sie abgewichen sind.

Das Übersprechen der Pilotfrequenzen P1 und P2 wird mit der in Fig. 4 oben dargestellten ATF-Schaltung ausgewertet. Das Übersprechen aus den beiden Nachbarspuren wird zunächst durch zwei Bandpässe getrennt. Die Ausgangssignale der Bandpässe werden mit Hilfe des Schalters SW2 entsprechend der Übersprechrichtung zwei Gleichrichtern zugeführt, deren Ausgangsspannungen mit einem Differenzverstärker verglichen werden. Die Ausgangsspannung des Differenzverstärkers wird in durch die Impulse S2 bzw. S3 festgelegten Zeitpunkten in zwei Abtast-und-Halte-Schaltungen übernommen. Der an den Ausgängen dieser Schaltungen gebildete Mittelwert dient als Regelspannung für die automatische Spurführung (ATF). Die ATF-Spannung wird der Servo-Schaltung zugeführt, wo sie auf den Hub-Antrieb einwirkt. Die Servo-Schaltung hat die Aufgabe, die Drehphase der Kopftrommel (Drum), Hubrichtung und Hubstellung (Lift), sowie die Bandstellung (Capstan), so aufeinander abzustimmen, daß die vollstandige Abtastung der aufgezeichneten Blöcke ermöglicht wird.

Da sich die Kopftrommelphase $\phi D$ gegenüber den aufgezeichneten Spuren (Bandphase $\phi T$) mit der Hubstellung y verändert, wird hier durch Zählen von Taktimpulsen C über eine Zeit (t1, t2), die dem Phasenunterschied zwischen $\phi D$ und $\phi T$ entspricht, ein Sollwert für die Hubstellung (y-Position) ermittelt. Der Sollwert wird mit dem aus den Informationssignalen in den Spuren gewonnenen Istwert für die Hubstellung verglichen. Das Vergleichsergebnis $\Delta y$ bestimmt die Maßnahmen der Servo-Schaltung. Die Servo-Schaltung kann z.B. berechnen, bei welcher Hubstellung eine Hubumkehr durchgeführt werden muß, damit nach dieser Hubumkehr der Sollzustand herbeigeführt ist, der dann durch normale Regelvorgänge aufrechterhalten werden kann. Die Ermittlung des Sollwertes für die y-Position erfolgt z.B. auf folgende Weise: Die Spannung DR, die die Kopftrommelphase angibt, wird so erzeugt, daß die Impulsflanken d im korrekten Betrieb mit einer bestimmten Flanke a der Spannung Q2 an der oberen bzw. unteren Blockgrenze zusammenfallen, und zwar bei Beginn der Abtastung eines neuen Blockes. Die zur Flanke a entgegengesetzte Flanke der Spannung Q2 ist mit b bezeichnet. Zur Ermittlung der Sollposition wird dann in Abhängigkeit von der Hubrichtung LD während der Zeit tl zwischen a und d bzw. während der Zeit t2 zwischen d und b gezählt. Die Zählung kann so erfolgen, daß das Zählergebnis im Bereich der aufgezeichneten Spuren eines Blockes einen im Zahlenbereich 1 ... 180 liegenden Wert ergibt.

In Fig. 5 sind für die Spannungen Q3 und PS zwei entgegengesetzte Phasenlagen angegeben. Wenn die mit I gekennzeichneten Spannungen bei der Kopffolge I gemäß Fig. 2 anzuwenden sind, dann passen die mit II gekennzeichneten Spannungen zu der Kopffolge II. Diese Zusammenhänge sind anhand des durch Fig. 2 festgelegten Aufzeichnungsmusters überprüfbar.

Alle erforderlichen Änderungen in der Periodizität der Signalabläufe bei den Hubumkehrvorgängen sind aus der Fig. 2 zu ersehen. Für einen genau festgelegten Hubumkehrvorgang sind diese Änderungen im Positionsdecoder vorprogrammiert, so daß bei jeder Hubumkehr die erforderlichen Maßnahmen, z.B. Setzen der zur Erzeugung der Spannungen Q2 und Q3 dienenden Flip-Flops mit Hilfe der Signale R2 und R3, durchgeführt werden, bevor die erste Spur eines neuen Blockes abgetastet bzw. aufgezeichnet wird.

Fig. 6 zeigt ein Ausführungsbeispiel, bei dem nur eine einzige Pilotfrequenz in drei Zeitfestern vorgesehen ist. Diese Lösung hat die Vorteile, daß eine unterschiedliche Bewertung der verschiedenen Frequenzen entfällt und nur ein Bandpaß für die Auswertung der Frequenz erforderlich ist. In Anlehnung an das Beispiel auf Seite 8 kann P = P2 gewählt werden. Wenn dann die Länge jedes Zeitfensters 10 Perioden der Pilotfrequenz entspricht, ergibt sich gegenüber dem Beispiel mit je 15 Perioden von P2 in 2 Zeitfenstern kein größerer Platzbedarf auf dem Aufzeichnungsträger. Der x-Bereich der drei Zeitfenster ist in Fig. 6 angegeben. Die Spurkennzahl y setzt sich zusammen aus z.B. 7 Bit für das Zählen der Spurtripel (1... 120) und 2 Bit für die Positionsangabe innerhalb eines Spurtripels (1 ... 3). Diese 2 Bit geben auch an, wann von welcher Seite das Übersprechen erfolgt. In der Spur "1" eines Spurtripels erfolgt z.B. das Übersprechen von P im Bereich x = 24 ... 43 von unten und im Bereich x = 44 ... 63 von oben.

**Ansprüche**

1. Verfahren zur Spurfindung bei einem Aufzeichnungs-und Wiedergabegerät innerhalb eines periodisch wiederkehrenden Aufzeichnungsmusters, das aus in Spurrichtung nebeneinanderliegenden Blöcken, die jeweils aus einer Vielzahl von mit entgegengesetztem Azimut aufeinanderfolgenden Spuren gebildet sind, besteht, wobei Spurführungsinformationen in nebeneinanderliegenden Zeitfenstern angeordnet sind und jeweils eines der Zeitfenster ein Pilotsignal (P1, P2,P) enthält, dessen Grundfrequenz nicht dem Azimutschutz unterliegt, **dadurch gekennzeichnet,** daß die jeweils nicht für ein Pilotsignal benutzten Zeitfenster Informationen über die Position innerhalb der betreffenden Spur (x) und in Bezug auf das Spurmuster (y) enthalten, die in einem Aufzeichnungscode, der dem Azimutschutz unterliegt, aufgezeichnet sind.

2. Verfahren nach Anspruch 1, **dadurch gekennzeichnet,** daß die Information aus mehrfach wiederholten Zahlenpaaren besteht, wobei die eine Zahl (x) ihre eigene Position innerhalb der Spur entspricht, d.h. sich von Zahlenpaar zu Zahlenpaar ändert, und die andere Zahl (y) als Spurkennzahl den Abstand von einer Bezugsspur darstellt und sich von Spur zu Spur ändert.

3. Verfahren nach Anspruch 1 und 2, **dadurch gekennzeichnet,** daß zwei verschiedene Pilotsignale (P1, P2) in bestimmter Reihenfolge in zwei Zeitfenstern angeordnet sind oder ein Pilotsignal (P) in festgelegter Reihenfolge in drei Zeitfenstern angeordnet ist (Fig. 2, 6).

4. Verfahren nach Anspruch 2 und 3, **dadurch gekennzeichnet,** daß bestimmte Bits der für die Positionsausgabe (x,y) benutzten Binärzahlen über die Spurfolgerichtung innerhalb eines Blockes und die Anordnung der Pilotsignale in den Zeitfenstern der Nachbarspuren Auskunft geben (Fig. 2, 6).

5. Verfahren nach einem oder mehreren der vorhergehenden Ansprüche, **dadurch gekennzeichnet,** daß die Informationen in einem Biphasecode wie einem Biphase-Level-Code aufgezeichnet sind, daß die Informationswörter (x und y) unterschiedliche Länge aufweisen und daß die einzelnen Informationswörter durch Sync-Muster voneinander getrennt sind, die der Biphase-Codierungsregel widersprechen.

6. Verfahren nach einem oder mehreren der vorhergehenden Ansprüche, **dadurch gekennzeichnet,** daß die Dauer der Wiederholungsperiode der Informationen (x, y) einem ganzzahligen Vielfachen der Wortlänge des eigentlichen PCM-Aufzeichnungscodes (10 Bit bei 8/10-Modulation) entspricht, und daß die Bitrate des Aufzeichnungscodes für die Informationen (x, y) mit der Bitrate des eigentlichen PCM-Aufzeichnungscodes übereinstimmt oder daß beide Bitraten ein möglichst kleines gemeinsames Vielfaches aufweisen.

7. Verfahren nach einem oder mehreren der vorhergehenden Ansprüche, **dadurch gekennzeichnet,** daß die Halbwellen des Pilotsignals durch kurze Eintastungen des Amplitudenwertes der jeweils entgegengesetzten Halbwelle unterbrochen sind.

8. Verfahren nach einem oder mehreren der vorhergehenden Ansprüche, **dadurch gekennzeichnet,** daß mit Hilfe der ausgewerteten Informationen (x, y) Zählschaltungen auf eine definierte Zählphase eingestellt werden und daß die Werte an den Ausgängen der Zählschaltungen danach die x-bzw. y-Position angeben, auch dann, wenn eine Auswertung der Positionsinformationen nicht möglich ist.

9. Verfahren nach einem oder mehreren der vorhergehenden Ansprüche, **dadurch gekennzeichnet,** daß bei Verwendung von zwei Zeitfenstern die Zuordnung von Pilotsignal (P1, P2) und Positionsinformation (x, y) zu den beiden Zeitfenstern für Spuren mit unterschiedlichem Azimut entgegengesetzt ist.

10. Verfahren nach Anspruch 9, **dadurch gekennzeichnet**, daß die Zeitfenster in benachbarten Blöcken mit aufeinander folgenden Köpfen gleichzeitig abtastbar sind, d.h. entgegengesetzten Azimut haben,und die in den Zeitfenstern dieser Spuren aufgezeichneten Pilotfrequenzen (P1, P2) unterschiedlich sind (Fig. 2).

Fig.1

Fig.5

X = 4...33 ; 34...63          X = 4...33 ; 34...63

| A | P1 | 1 |
|---|----|---|
| B | 1 | P2 |
| C | P2 | 2 |
| D | 2 | P1 |
| A | P1 | 3 |
| B | 3 | P2 |
| C | P2 | 4 |

C
D
A
B
C
D
A

| A | P2 | 0 |
|---|----|---|
| D | 1 | P2 |
| C | P1 | 1 |
| B | 2 | P1 |
| A | P2 | 2 |
| D | 3 | P2 |
| C | P1 | 3 |

C
B
A
D
C
B
A

l

$V_x$

$V_y$   $V_1$

$-V_y$   $V_2$

$V_x$

I    II

| B | 177 | P2 |
|---|-----|----|
| C | P2 | 178 |
| D | 178 | P1 |
| A | P1 | 179 |
| B | 179 | P2 |
| C | P2 | 180 |
| D | 180 | P1 |
| A | P1 | 181 |
| B | 181 | P2 |
| C | P2 | 182 |
| D | 182 | P1 |
| A | P1 | 183 |

D
A
B
C
D
A
B
C
D
A
B
C

I    II

| D | 177 | P2 |
|---|-----|----|
| C | P1 | 177 |
| B | 178 | P1 |
| A | P2 | 178 |
| D | 179 | P2 |
| C | P1 | 179 |
| B | 180 | P1 |
| A | P2 | 180 |
| D | 181 | P2 |
| C | P1 | 181 |
| B | 182 | P1 |
| A | P2 | 182 |

B
A
D
C
B
A
D
C
B
A
D
C

b'

a

a'

b

Fig.2

Fig.3

0 280 163

$$x = 4\ldots23;24\ldots43;44\ldots63$$

Fig. 6